# EUROPEAN PATENT APPLICATION

(11) **EP 2 208 414 A2**
(43) Date of publication of application: **21.07.2010**
(21) Application number: 09468009.7
(22) Date of filing: 29.10.2009
(51) Int. Cl.: A01K 1/015, A01K 1/01

(54) **Manufacturing process and the highly absorbent pad for the litter tray**

(30) Priority: 20.01.2009 SI 200900014
(71) Applicant: TT Okroglica, d.d., 5293 Volcja Draga (SI)
(72) Inventor: Kete, Evgen, 5270 Ajdovscina (SI)
(74) Representative: Pipan, Marjan

(57) **Abstract**

The subject of the invention is the manufacturing process and a highly absorbent pad for a cat litter tray, which encourages the transformation of the liquid (feline urine) into a viscous state in the form of a gel and moreover, prevents the appearance of the unpleasant odours in the room and excessive bacterial growth and thus extending the usefulness of sand in a cat litter tray.

A highly absorbing pad is composed of wrapped thermoplastic non-woven textiles made of a highly absorbent powder that absorbs moisture. In contact with the liquid the pad begins to swell. The absorbent powder - absorber is transforming from the solid state in the viscous state in the form of a gel.

## Description

The subject of the invention is the manufacturing process of a highly absorbent pad for a cat litter tray which allows a transformation of the liquid (feline urine) into a viscous state in the form of a gel and moreover, prevents unpleasant odours in the room and excessive bacterial growth and thereby extending the usefulness of sand for a cat litter tray. The invention belongs to a class A 01 K 29/00.

The invention represents a successful solution for the technical problem as it defines the process of manufacture and use of the pad for a cat litter tray which extends the usefulness of sand for a cat litter tray while preventing the appearance of the unpleasant odours and a possibility of bacterial growth.

There is in a container of a cat litter tray, which is now mostly used, a material, i.e. a specific type of "sand" which contains mainly high absorbent materials with disinfectant elements and possibly the components to prevent the appearance of the unpleasant odours. For example, the patent document RO 121885 determines a composition of a mixture for a cat litter tray of dry material obtained from moulds of a ceramic industry as pottery plaster and kaolin clay and also of neutralizing material in the form of sodium hydrogen and disinfectant element in the form of urea peroxide. The patent document W02004010772 represents a granular mixture containing herbal products based on cellulose and acid pyrophosphate salts with alkaline earth metal. There are sat horn tree trunks as vegetable products based on cellulose and sodium as a salt of acid pyrophosphate. The combination has a high capacity of absorption, is environmentally friendly and may be removable.

The effective components for absorption and disinfection are of key importance for the composition of the "sand" for a cat litter tray described above. Nevertheless, there still remains to improve effectively the capacity of absorption in the amount as dictated by the size of a container of a cat litter tray. There is a possibility to achieve a higher level of absorption capacity for a longer period. Therefore, the actual filling has to be changed in a shorter period of time, which consequently requires more financial means.

There are also cat litter trays with layers at the bottom of a container, one of which allows the absorption of fluids and the other is infiltrated by the components that enable disinfection and taking effect of a deodorant. Both layers are covered with sand; mainly for the purpose of facilitating the movement of an animal that is to say to prevent the damages on the layer of absorbent made by the animal's claws. The layers can be removed and discarded after a time. Such solution is described in the US patent document No. 4,869,204 and 4,800,841.

The main disadvantage of the mentioned solution is a limited use of a particular layer adapted to each container in such manner to allow a fixation of a layer. The usefulness of a thinner layer is of a shorter time which requires frequent replacement.

The invention provides a solution for the technical aspect of the problem by the means of the manufacturing process and a highly absorbent pad for a cat litter tray which is intended to be placed under the sand in a cat litter tray. The pad consists of a layer of thermoplastic non-woven textiles and powder components which have the capacity to be transformed in a contact with the liquid (feline urine) from the solid to the viscous state in the form of a gel.

The invention is presented in details afterwards the description of the manufacturing process of a highly absorbent pad for a cat litter tray and the composition of a highly absorbent pad.

According to the invention a highly absorbing pad is composed of wrapped thermoplastic non-woven textiles made of a highly absorbent powder that absorbs moisture. In contact with the fluid the pad begins to swell. It is the absorbent powder that changes from the solid in the viscous state in the form of a gel.

The process of manufacture of a highly absorbent pad is composed of two phases. The first is the processing of the upper wrapping layer of the material. The thermoplastic non-woven textiles are processed by the mixture of a carbon and water polyacrylate dispersion. The non-woven textiles are unrolled by the means of the unrolling device which leads the textiles through the spin rollers, the desiccant chamber to the unrolling device.

In the second step, a lower thermoplastic non-woven material is treated with an antibacterial agent. In the aperture phase the thermoplastic non-woven textiles absorb the mixture of antibacterial agents and water. In this way, the bacteria growth in the pad of a cat litter tray is prevented and thereby the possibility of the appearance of the unpleasant odours is lower.

The resulting components are ready for the next phase of the manufacturing process, namely the coating stage - application of grit on various textile and technical materials carried out by the machine. Thermoplastic non-woven textiles treated with a carbon paste go to the area where undertaking the application of a highly absorbent grit. Non-woven textiles sprinkled with a mixture of a highly absorbent powder travel through the heat chamber where prepared for bonding with the upper wrapping layer of non-woven textiles.

From the other unrolling device comes a non-woven material treated with an antibacterial aperture covering the material and sprinkled with a mixture of a highly absorbent powder. Both materials go to two compression cylinders which merge them into a pad.

The next stage is welding of the pad - according to its width dimension - to a particular dimension that is suitable for a cat litter tray. By means of heath and pressure the edges of a pad are melted. Thereby, leakage of gel is prevented.

A highly absorbent pad for a cat litter tray is an invention that offers a perfect solution for the technical problem since by the means of the pad the usefulness of a standard "sand" is longer. In addition, it reduces the appearance of the unpleasant odours of feline urine, absorbs urine, is simple to use and maintain, reduces consumption of "sand" and makes it easier to clean a cat litter tray, prolongs its usefulness and prevents sticking of sand to the bottom of a cat litter tray. The pad has a high capacity of retention of fluid since the level of absorption of a pad with dimensions of 24 x 34 cm is approx 1.7 litres.

## Claims

1. A highly absorbent pad for a cat litter tray
**characterised in that**
in the thermoplastic non-woven textiles containing powder components which transform in contact with the liquid (feline urine) from the solid in the viscous state in the form of a gel.

2. A highly absorbent pad for a cat litter tray
**characterised in that**
the thermoplastic non-woven textiles used and for a highlyabsorbent powder composed of a polycarbonate powder and hot melt ethylene vinyl acetate.

3. The manufacturing process of a highly absorbent pad for a cat litter tray
**characterised in that**
it contains two phases, in the first step, the processing of the upper wrapping layer of materials envolves the processing of thermoplastic non-woven textiles with a mixture of polycarbonate and a carbon aqueous dispersion; in the second step, the non-woven textiles travel through the rollers spin, the desiccant chamber to the unrolling device; in the second stage of the processing the lower thermoplastic non-woven material is treated with an antibacterial agent while in the aperture phase thermoplastic non-woven textiles with antibacterial agents with water and both are then ready to enter the coating phase - application of a grit on various materials and technical textiles where the thermoplastic non-woven textiles treated with a carbon paste go from the unrolling device to the area where application of a highly absorbent grit is carried out; the non-woven textiles with a mixture of a high absorbent powder travels through the heat chamber prepared for bonding with the upper wrapping layer of non-woven textiles and from the other unrolling device a non-woven comes a material treated with antibacterial aperture covering the material and sprinkled with a mixture of a highly absorbent powder; both materials go to compression cylinders which merge them into a pad. The next stage is welding of the pad - according to its width dimension - to a particular dimension that is suitable for a cat litter tray and by means of heath and pressure the edges of a pad are melted.
